# EUROPEAN PATENT SPECIFICATION

(11) **EP 3 138 957 B1**
(45) Date of publication and mention of the grant of the patent: **18.09.2019**
(21) Application number: 15786587.4
(22) Date of filing: 06.04.2015
(51) Int. Cl.: D07B 1/06

(54) **BRASS-PLATED STEEL WIRE FOR REINFORCEMENT OF RUBBER ARTICLES**
VERMESSINGTER STAHLDRAHT ZUR VERSTÄRKUNG VON GUMMIARTIKELN
CÂBLE D'ACIER POUR RENFORCEMENT DE COMPOSANT EN CAOUTCHOUC AVEC PLACAGE EN LAITON

(30) Priority: 30.04.2014 JP 2014094222
(43) Date of publication of application: 08.03.2017
(73) Proprietor: Bridgestone Corporation, Tokyo 104-8340 (JP)
(72) Inventor: MUSHA, Shinichi, Tokyo 104-8340 (JP); YAMAGISHI, Junichi, Tokyo 104-8340 (JP)
(74) Representative: Lang, Johannes
(86) International application number: PCT/JP2015/001932
(87) International publication number: WO 2015/166632

(56) References cited:
- WO-A1-2011/030547
- JP-A- 2004 068 102
- JP-A- 2009 091 691
- JP-A- 2011 057 075
- US-B1- 6 475 640
- VAN OOIJ ET AL: "Surface composition, oxidation and sulfidation of cold-worked brass and brass-coated steel wire as studied by x-ray photoelectron spectroscopy I. Surface composition of commercial cold-worked brass", SURFACE TECHNOLOGY, ELSEVIER SEQUOIA, LAUSANNE, CH, vol. 6, no. 1, 1 November 1977 (1977-11-01), pages 1-18, XP025591680, ISSN: 0376-4583, DOI: 10.1016/0376-4583(77)90019-X [retrieved on 1977-11-01]

## Description

### TECHNICAL FIELD

This disclosure relates to a brass-plated steel wire for reinforcing a rubber article.

### BACKGROUND

In rubber articles in which strength is particularly required, such as automobile tires, conveyor belts, hoses and the like, for the purpose of reinforcing a rubber and improving the strength and the durability, used are steel cord-rubber composites, which are obtained by coating a metal reinforcing material, such as steel cord and the like, with a coating rubber. Here, in order to exhibit high reinforcing effect and obtain reliability in such a steel cord-rubber composite, a stable and strong adhesion is required between the coating rubber and the metal reinforcing material.

In order to obtain a steel cord-rubber composite exhibiting such high adhesion between the coating rubber and the metal reinforcing material, widely used is a method of embedding in a coating rubber compounded with sulfur a metal reinforcing material such as steel cords and the like plated with zinc, brass, etc., and simultaneously adhering the same with rubber vulcanization during heating vulcanization, i.e., direct vulcanization adhesion. Previously, in order to further improve the adhesion due to the direct vulcanization adhesion between the coating rubber and the metal reinforcing material, various studies have been performed regarding the direct vulcanization adhesion.

For example, PTL1 (JP2009-91691A) suggests a steel wire, in which a circumference of the steel wire is brass-plated, subjected to drawing process, and then a surface of the steel wire is washed in an aqueous solution containing a transition metal as a salt, and thereby the concentration of transition metals except for zinc and copper on the surface of the brass plating is set to 0.01 mass% or more. US 6 475 640 B1 refers to a brass coated metallic wire for use as a reinforcing component in an elastomeric article. The brass coating is formed by depositing alternate layers of copper and zinc on the wire and then drawing the wire to alloy the copper and zinc to form a bras coating on the wire.

### CITATION LIST

### Patent Literature

PTL1: JP2009-91691A

### SUMMARY

### (Technical Problem)

However, although the steel wire as disclosed in PTL 1 is regarded as having improved initial adhesiveness and heat-resistant adhesiveness with rubber, further improvement in the adhesion during overvulcanization (hereinafter referred to as overvulcanization adhesiveness) has been desired.

The reason why such overvulcanization adhesiveness is regarded as important is that, for example, during tire vulcanization, in order to ensure the vulcanization degree of the entire rubber inclusive of the tire inside, for example, after performing vulcanization for a relatively long time, there is a risk that there are parts where vulcanization is excessively performed, an adhesion in these parts is deteriorated due to influence of thermal history. The mechanism of such phenomenon is unclear, but is considered as progress of a reaction that components such as fatty acids, metallic salts and the like in the rubber attack the adhesion layer.

Moreover, overvulcanization adhesiveness, initial adhesiveness and heat-resistant adhesiveness are affected as well by the oxygen amount of the surface of the brass-plated steel wire, which, however, has not been sufficiently studied in the steel wire of PTL1.

Then, this disclosure is to provide a brass-plated steel wire for reinforcing a rubber article, which is capable of improving overvulcanization adhesiveness.

### (Solution to Problem)

In the brass-plated steel wire for reinforcing a rubber article of this disclosure, when measured with X-ray photoelectron spectroscopy (XPS), an outermost surface contains zinc at an amount of 4.93 to 14 atom%, and contains oxygen at an amount of 50 atom% or less; and in the outermost surface, an atomic ratio of copper to zinc is more than 2.33 and 6 or less. According to the brass-plated steel wire for reinforcing a rubber article of this disclosure, it is possible to improve the overvulcanization adhesiveness.

Here, in this disclosure, the "atom%" refers to a ratio of the number of specific atoms to the number of all atoms measured with XPS, and the "atomic ratio" refers to a ratio of atom numbers.

The brass-plated steel wire for reinforcing a rubber article of this disclosure preferably further contains a metal having an ionization tendency less than zinc and more than copper at an amount of 0.01 to 2.0 atom%. According to this aspect, it is possible to reduce a content of cobalt salts in a coating rubber of the steel wire, and thereby improve the durability of the coating rubber.

The brass-plated steel wire for reinforcing a rubber article of this disclosure preferably contains phosphorus at an amount of 0.5 to 5 atom%. According to this aspect, it is possible to easily perform adhesion between the brass-plated steel wire for reinforcing a rubber article and the coating rubber, while ensuring the initial adhesion rate.

### (Advantageous Effect)

According to this disclosure, it is possible to provide a brass-plated steel wire for reinforcing a rubber article, which is capable of improving the overvulcanization adhesiveness.

### DETAILED DESCRIPTION

Hereinafter, this disclosure is described specifically based on its embodiments.

In the brass-plated steel wire for reinforcing a rubber article of this disclosure (hereinafter referred to "the steel wire" as well), when measured with X-ray photoelectron spectroscopy (XPS), an outermost surface contains zinc at an amount of 4.93 to 14 atom%, and contains oxygen at an amount of 50 atom% or less; and in the outermost surface, an atomic ratio of copper to zinc is more than 2.33 and 6 or less.

Here, in the present specification, the outermost surface of the brass-plated steel wire for reinforcing a rubber article refers to a region of which the thickness from a surface of such steel wire in its depth direction is measured with X-ray photoelectron spectroscopy (XPS), and more specifically, a thickness of about several nm corresponding to an emission depth of photoelectron generated when irradiating X-ray on a surface of the brass-plated steel wire for reinforcing a rubber article.

When the outermost surface of the brass-plated steel wire for reinforcing a rubber article of this disclosure is measured with the aforementioned XPS, the outermost surface of such steel wire contains zinc at an amount of 4.93 to 14 atom%, preferably 4.95 to 13.5 atom%, more preferably 5.0 to 13 atom%. When zinc is 4.93 atom% of more, it is possible to prevent insufficiency in the adhesion durability (heat-resistant adhesiveness) of the obtained steel wire-rubber composite. Moreover, when zinc is 14 atom% or less, it is possible to prevent reduction in initial adhesion rate due to excess amount of zinc, in particular, zinc oxide.

In the brass-plated steel wire for reinforcing a rubber article of this disclosure, an atomic ratio of copper to zinc in the aforementioned outermost surface is more than 2.33 and 6 or less, preferably more than 2.33 and 3 or less. When the brass-plated steel wire for reinforcing a rubber article contains zinc at an amount within the aforementioned range, it is possible to improve the overvulcanization adhesiveness. Specifically, when vulcanizing a steel wire and its coating rubber, since copper reacts with sulfur in the coating rubber and generates an adhesion layer formed of copper sulfides, if the atomic ratio of copper to zinc is more than 2.33, copper exists sufficiently and the adhesion layer is generated sufficiently. Therefore, excellent adhesion is obtained even in overvulcanization. Further, when the atomic ratio of copper to zinc is 6 or less, it is possible to prevent reduction in initial adhesiveness due to enlargement of the adhesion layer. Here, overvulcanization adhesiveness refers to adhesion of the steel wire-rubber composite when subjecting the coating rubber to vulcanization for a time longer than usual.

Then, in the brass-plated steel wire for reinforcing a rubber article of this disclosure, when measured with the aforementioned XPS, its outermost surface preferably further contains a metal having an ionization tendency less than zinc and more than copper at an amount of 0.01 to 2.0 atom%, more preferably 0.02 to 1.5 atom%, and even more preferably 0.05 to 1.0 atom%. By containing such metal, it is possible to reduce the content of cobalt salt in the coating rubber of the steel wire, and thus the durability of the coating rubber is improved. Moreover, if more than 2.0 atom%, no further improvement in the durability of the coating rubber is certified, and thus the upper limit of such metal is set to 2.0 atom%.

Further, cobalt salts compounded into the rubber composition of the tire are preferably reduced as possible. Specifically, although cobalt salts are ordinarily compounded into a rubber composition for a coating rubber as an adhesion promoter in order to improve the initial adhesiveness between the coating rubber and a metal reinforcing material during direct vulcanization adhesion used in tires, etc., the cobalt salts are preferably reduced as possible from the viewpoint of improvement in the durability against deterioration and crack growth, etc. of the coating rubber.

Here, the metal having an ionization tendency less than zinc and more than copper can be, for example, chromium (Cr), iron (Fe), cadmium (Cd), cobalt (Co), nickel (Ni), tin (Sn), lead (Pb), etc. Among the above, cobalt is preferable. Cobalt is ordinarily compounded to many coating rubbers as an adhesion promoter in order to achieve further improvement in adhesion. However, depending on the amount of cobalt contained in such coating rubber, cobalt tends to lead to reduction in durability of the coating rubber itself against heat, wet and oxidation. However, by containing such cobalt in a brass-plated steel wire for reinforcing a rubber article, it is possible to reduce the cobalt content in the coating rubber, effectively suppress deterioration in physical properties of the rubber, and simultaneously reduce the cost.

In the brass-plated steel wire for reinforcing a rubber article of this disclosure, when measured with the aforementioned XPS, its outermost surface preferably contains phosphorus at an amount of 0.5 to 5 atom%, more preferably 1.0 to 3.0 atom%, even more preferably 1.5 to 2.5 atom%. Since phosphorus plays a role in adjusting the adhesion rate between the brass-plated steel wire for reinforcing a rubber article and the coating rubber, by controlling its content within the aforementioned range, a better adhesion is obtained.

The aforementioned brass-plated steel wire for reinforcing a rubber article is manufactured with, for example, the following method. The circumference of the steel wire is brass-plated, and then subjected to drawing process. Compositions of such plating ordinarily contain copper by 70 mass% or less, preferably 60 to 65 mass%, and contains zinc by 30 mass% or more, preferably 35 to 40 mass%. It is possible to immerse the surface of the obtained steel wire in an aqueous solution containing as a metallic salt a metal having an ionization tendency less than zinc and more than copper, and then twist a plurality of these steel wires, or to twist a plurality of these steel wires to obtain steel cords, and then immerse the surfaces of the steel cords in an aqueous solution containing the aforementioned metallic salt.

Such metallic salt is not specifically limited as long as exhibiting a high solubility to water, and can be, for example, metal chlorides, metal carbonates, metal nitrates, metal sulfates, metal acetates, metal citrates, metal gluconates, acetylacetone metal salts, etc. Among the above, in order to achieve a preferable pH value mentioned above in an aqueous solution containing this metallic salt, metal acetates are preferable.

In the aqueous solution containing a metallic salt of a metal containing a metal having an ionization tendency less than zinc and more than copper, the concentration of the metallic salt is ordinarily 0.001 to 1 mol/L, preferably 0.005 to 0.5 mol/L, and more preferably 0.01 to 0.2 mol/L. The pH of the aqueous solution is ordinarily 5.0 to 8.0, preferably 5.5 to 7.5, more preferably 6.0 to 7.0. By using an aqueous solution containing a metallic salt having a concentration and a pH value within the aforementioned range, there is not risk of negative influence to the brass plating, and simultaneously, it becomes easy to contain zinc and a metal having an ionization tendency less than zinc and more than copper by a predetermined amount in the outermost surface of the steel wire. Moreover, such pH value is preferable as well from the viewpoint considering the environment and the safety during manufacture.

The time for immersing the steel wire in an aqueous solution containing the aforementioned metallic salt can be set appropriately, but is ordinarily 0.05 to 30 seconds, preferably 0.1 to 20 seconds.

Furthermore, the zinc concentration and the atomic ratio of copper to zinc in the aforementioned outermost surface of the brass-plated steel wire for reinforcing a rubber article can be controlled, for example, by adjusting the composition of the brass plating, alternatively, by adjusting the treatment (immersion) time with the aqueous solution and/or the pH of the aqueous solution. For example, by elongating the treatment time with the aqueous solution, or reducing the pH of the aqueous solution, it is possible to reduce the number of zinc atoms, and increase the atomic ratio of copper to zinc.

Via such immersion treatment, the surface of steel wire or steel cord is cleaned, the component (ZnO), which is said as inhibiting the adhesion between the steel wire and the coating rubber in this disclosure, is removed moderately, and thereby the initial adhesiveness between the steel wire and the coating rubber can be further improved.

After subjecting the steel wire to immersion treatment in the aforementioned aqueous solution of a metallic salt, when the surface of the steel wire is activated, if the surfaces contacts oxygen in the air after the immersion treatment, there is a probability that the oxygen amount in the surface is increased and the activation is deteriorated due to oxidation reaction. In particular, when heating and drying the wire surface in the presence of oxygen, the aforementioned deterioration in activation becomes obvious. If the oxygen amount in the steel wire surface is more than 50 atom%, the adhesion reaction is inhibited, and thus the oxygen amount in the aforementioned outermost surface of the brass-plated steel wire of this disclosure is 50 atom% or less.

Therefore, after being subjected to immersion treatment in the aforementioned aqueous solution containing a metallic salt, the steel wire is not subjected to drying by being heated to 45°C or more.

The method for drying the steel wire after performing immersion treatment in the aforementioned aqueous solution containing a metallic salt can be performed, for example, by injecting compressed air onto the steel wire surface. Further, in order to prevent increase in the oxygen amount afterward, the steel wire is preferably stored in an environment of lower than 45°C.

Here, when the outermost surface of the aforementioned brass-plated steel wire for reinforcing a rubber article contains cobalt as a metal having an ionization tendency less than zinc and more than copper, an amount of cobalt to be compounded into the rubber composition for coating the aforementioned brass-plated steel wire for reinforcing a rubber article can be reduced. For example, it is possible to contain cobalt at an amount of less than 0.04 parts by mass per 100 parts by mass of a rubber component, or not to compound cobalt. In that case, it is possible to effectively suppress deterioration in physical properties of the coating rubber, and simultaneously reduce the cost. From such viewpoint, it is preferable that cobalt is not contained at all.

It is preferable to use in a tire a composite of the steel wire of this disclosure and the rubber composition coating the steel wire (steel wire-rubber composite) as a reinforcing member such as a carcass ply, a belt ply and the like. A structure of such a tire is not specifically limited, and well-known tire structure can be directly used. Here, the aforementioned steel wire-rubber composite is excellent in initial adhesiveness and heat-resistant adhesiveness, and thus it is particularly effective to use the aforementioned steel cord-rubber composite to an article having a high bending frequency such as tire.

### EXAMPLES

Next, this disclosure is specifically described based on examples, but this disclosure is not limited to these Examples.

### [Example 1]

A steel cord of 1×3 structure was produced by twisting steel wires plated with brass (Cu: 63 mass%, Zn: 37 mass%), and then, this steel cord was immersed for 10 seconds in an aqueous solution containing cobalt acetate by 0.1 mol/L (adjusted to pH 6.5 with acetic acid), removed of extra attached liquid with air blow, and afterward stored at normal temperature for 1.5 hours. A sample was produced by arranging the steel cords parallelly, coating with the rubber composition having a formulation shown in Table 1 in the upward and the downward directions, and performing vulcanization at the conditions according to Table 1. Regarding the sample, the overvulcanization adhesiveness, the aging property and the crack growth were evaluated by using the following methods. The obtained evaluation results, and the results of the amounts (atom%) of phosphorus (P), zinc (Zn), oxygen (O) and cobalt (Co) and the atomic ratio (Cu/Zn) of copper to zinc, which were obtained by measuring the components of the outermost surface of the aforementioned immersed steel wire by using X-ray photoelectron spectroscopy (XPS, Quantera SXM, made by Ulvac-Phi., Inc.), were as shown in Table 1.

The measurement conditions with X-ray photoelectron spectroscopy is as following.
X-ray source: Monochromatized Al-Kα ray
Measurement region: 50 µmφ
Measurement peak: C1s, O1s, N1s, P2p, Cu2p_{2/3}, Zn2p_{2/3}
Data treatment: Multipak (made by ULVAC-PHI, Inc.)
Quantitation: quantitated from the obtained peak area by using relative sensibility coefficient method
* Cu/Zn is a ratio of quantitative values of Cu2p_{2/3} and Zn2p_{2/3}.

### [Examples 2 to 4 and Comparative Examples 1 to 5]

A sample was produced and evaluated in the same manner as in Example 1, except that each compounding amount was varied as shown in Table 1. The obtained results were as shown in Table 1. Further, regarding the zinc concentration and the atomic ratio of copper to zinc, for example, by elongating the treatment time with the aqueous solution or lowering the pH of the aqueous solution, the number of zinc atoms is reduced and Cu/Zn is increased.

### [Comparative Example 6]

A sample was produced and evaluated in the same manner as in Example 1, except that the drying conditions, etc. after immersion treatment of the steel cord were varied as shown in Table 1. The obtained results were as shown in Table 1.

### <Evaluation method of overvulcanization adhesiveness>

After vulcanizing each sample at 160°C for 200 minutes, according to ASTM-D-2229, the steel cord was pulled out from each sample, the coating state of the rubber was visually observed, and each sample was subjected to index evaluation with the rubber coverage of the sample of Comparative Example 1 as 100. A larger value represents an excellent overvulcanization adhesiveness.

### <Evaluation method of aging property of rubber>

After vulcanizing the unvulcanized rubber at 160°C for 20 minutes, and aging at 100°C for 24 hours (thermal aging condition), by performing tensile test according to JIS K6251, Eb (elongation at break (%)) and Tb (tensile strength (MPa)) were measured, TF (toughness: Eb×Tb) after thermal aging was determined, and each sample was subjected to index evaluation with Comparative Example 1 as 100. A larger value represents excellent aging property of the rubber (i.e., unlikely to deteriorate under thermal aging condition).

### <Evaluation method of crack growth resistance of rubber>

Regarding each sample, constant stress fatigue test was performed by using a fatigue tester manufactured by Ueshima Seisakusho Co., Ltd., the number of times until fatigue was measured, and was represented with an index with Comparative Example 1 as 100. A larger value represents an excellent crack growth resistance.

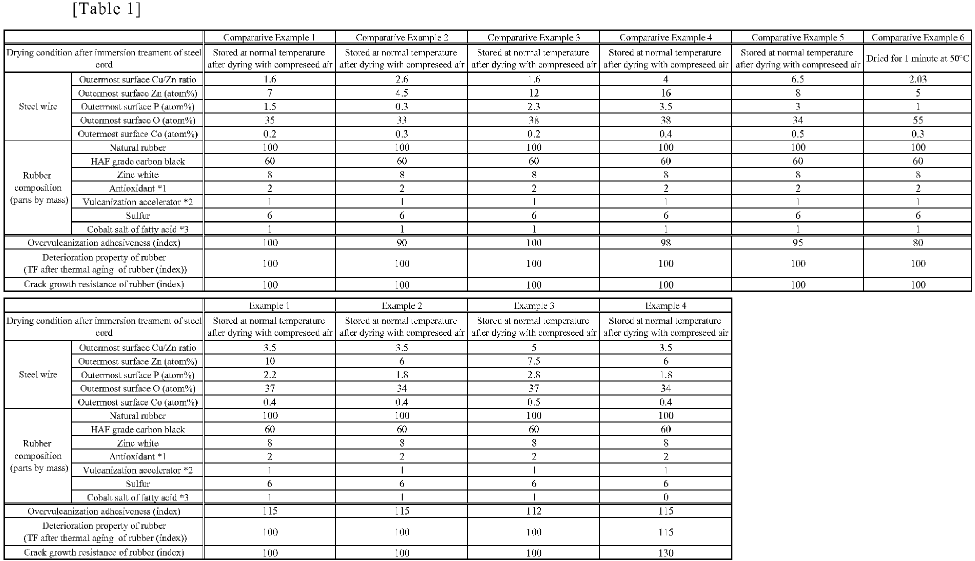

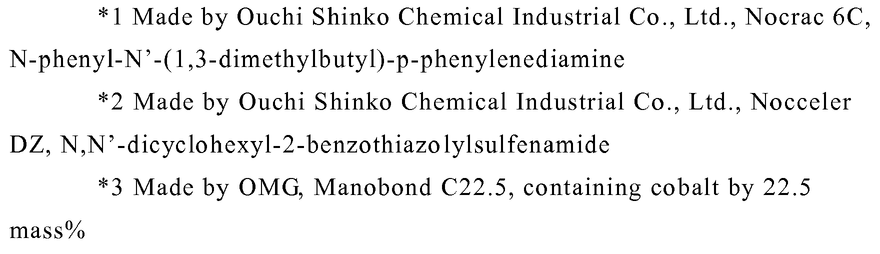

As clarified from the results in Table 1, it is understood that Examples 1 to 4, which use steel cords containing Zn and O at a specific amount and having a specific value of Cu/Zn as measured with XPS in the outermost surface, exhibit excellent overvulcanization adhesiveness, as compared to Comparative Examples 1 to 6.

### INDUSTRIAL APPLICABILITY

According to this disclosure, it is possible to provide a brass-plated steel wire for reinforcing a rubber article, which is capable of improving the overvulcanization adhesiveness.

## Claims

1. A brass-plated steel wire for reinforcing a rubber article,
wherein:
when measured with X-ray photoelectron spectroscopy, abbreviated XPS,
an outermost surface contains zinc at an amount of 4.93 to 14 atom%, and contains oxygen at an amount of 50 atom% or less; and
in the outermost surface, an atomic ratio of copper to zinc is more than 2.33 and 6 or less.

2. The brass-plated steel wire for reinforcing a rubber article according claim 1, containing a metal having an ionization tendency less than zinc and more than copper at an amount of 0.01 to 2.0 atom%.

3. The brass-plated steel wire for reinforcing a rubber article according claim 1 or 2, containing phosphorus at an amount of 0.5 to 5 atom%.

## Patentansprüche

1. Messing-plattierter Stahldraht zum Verstärken eines Gummiartikels,
wobei:
bei Messung mit Röntgen-Photoelektronenspektroskopie, abgekürzt XPS,
eine äußerste Oberfläche Zink in einer Menge zu 4,93 bis 14 Atom% enthält, und Sauerstoff in einer Menge zu 50 Atom% oder weniger enthält; und
in der äußersten Oberfläche ein atomares Verhältnis von Kupfer zu Zink mehr als 2,33 und 6 oder weniger beträgt.

2. Messing-plattierter Stahldraht zum Verstärken eines Gummiartikels nach Anspruch 1, der ein Metall mit einer lonisierungstendenz, die geringer als Zink und höher als Kupfer ist, in einer Menge zu 0,01 bis 2,0 Atom% enthält.

3. Messing-plattierter Stahldraht zum Verstärken eines Gummiartikels nach Anspruch 1 oder 2, der Phosphor in einer Menge zu 0,5 bis 5 Atom% enthält.

## Revendications

1. Fil en acier plaqué de laiton pour renforcer un article en caoutchouc,
dans lequel :
lors de la mesure par spectroscopie photoélectronique par rayons X, abrégée XPS,
une surface la plus externe contient du zinc en une quantité de 4,93 à 14 % atomique, et contient de l'oxygène en une quantité de 50 % atomique ou moins ; et
dans la surface la plus externe, un rapport atomique du cuivre au zinc est supérieur à 2,33 et 6 ou moins.

2. Fil en acier plaqué de laiton pour renforcer un article en caoutchouc selon la revendication 1, contenant un métal ayant une tendance à l'ionisation inférieure au zinc et supérieure au cuivre en une quantité de 0,01 à 2,0 % atomique.

3. Fil en acier plaqué de laiton pour renforcer un article en caoutchouc selon la revendication 1 ou 2, contenant du phosphore en une quantité de 0,5 à 5 % atomique.
